Europäisches Patentamt

(19) European Patent Office

Office européen des brevets

(11) Publication number: **0 261 822**
**B1**

(12) **EUROPEAN PATENT SPECIFICATION**

(45) Date of publication of the patent specification:
**01.08.90**

(21) Application number: **87307762.2**

(22) Date of filing: **03.09.87**

(51) Int. Cl.⁵: **C02F 11/06, C02F 9/00,
C02F 1/78, C02F 1/24**

(54) Treatment of aqueous waste material.

(30) Priority: **18.09.86 GB 8622510**

(43) Date of publication of application:
**30.03.88 Bulletin 88/13**

(45) Publication of the grant of the patent:
**01.08.90 Bulletin 90/31**

(84) Designated Contracting States:
**DE ES FR GR IT NL**

(56) References cited:
**GB-A- 2 034 684
GB-A- 2 073 727
GB-A- 2 128 980
US-A- 3 772 188
US-A- 3 804 755**

**CHEMICAL ABSTRACTS, vol. 95, 14th December 1981,
page 334, abstract no. 209076k, Columbus, Ohio, US; &
JP-A-81 91 898 (NISHIHARA ENVIRONMENTAL
SANITATION RESEARCH CORP. LTD.) 25-07-1981**

(73) Proprietor: **The BOC Group plc, Chertsey Road,
Windlesham Surrey GU20 6HJ(GB)**

(72) Inventor: **Garrett, Michael Ernest, 92 York Road, Woking
Surrey(GB)**

(74) Representative: **Wickham, Michael et al, c/o Patent and
Trademark Department The BOC Group plc Chertsey
Road, Windlesham Surrey GU20 6HJ(GB)**

## Description

This invention to the treatment of aqueous waste material. It is paticularly concerned with the treatment of sewage sludge and animal slurry.

Sewage sludge and animal slurry are typically characterised by having a relatively high biochemical oxygen demand. Thus, traditional aerobic or anaerobic treatments of such aqueous waste materials are particularly time consuming, and accordingly, in the event that such treatments are employed, there is a need for substantial holding tanks and the like to be provided upstream of the main treatment vessel or vessels. Frequently, the land necessary for such holding vessels is not available.

We believe substantial improvements in the treatment of sewage sludge and animal slurry may be achieved by the effective utilisation of ozonised oxygen as a treatment gas.

According to the present invention there is provided a method of treating aqueous waste material containing organic solids, comprising establishing in a pressure vessel a volume of the aqueous waste material to be treated, comminuting solids in the waste material externally of the pressure vessel, continuously withdrawing a stream of aqueous material from the pressure vessel, introducing ozonised oxygen into the stream, forming a dispersion of the bubbles of ozonised oxygen in the stream, re-introducing the stream into the volume of waste material in the vessel, creating turbulence at the region of introduction, collecting indissolved ozonised oxygen in the head space of the vessel, and withdrawing gas from the head space and introducing it into said stream to form said bubbles.

The invention also provides apparatus for treating aqueous waste material containing organic solids, comprising a pressure vessel having an inlet for the aqueous waste material, and an outlet for withdrawing a stream of aqueous waste material therefrom; means exterior to the pressure vessel for comminuting solids in the organic waste material; means for withdrawing a stream of aqueous material from the vessel; means for introducing ozonised oxygen into said stream such that a dispersion of bubbles of ozonised oxygen in the stream is able to be formed; means for reintroducing the stream into the waste material in the vessel; means for creating turbulence at the region of reintroduction, and wherein said means for introducing ozonised oxygen into said stream comprises means for withdrawing ozonised oxygen from the head space of the vessel, and for passing it into said stream.

Utilisation of ozonised oxygen facilitates relatively rapid reduction in the biochemical oxygen demand of the waste material. In particular ozonised oxygen helps to render the material sterile, and facilitates a breakdown of organic compounds that are relatively difficult to oxidise (for example phenols). It is believed that the rate determining step in the treatment is the dissolution of the ozonised oxygen. By contacting bubbles of the ozonised oxygen with a stream of the waste material, relatively rapid dissolution of the ozone and oxygen is facilitated. Moreover, it is not necessary to rely upon transfer of gas from the ullage or head space of the pressure vessel to a liquid surface exposed to the ullage space in order to effect transfer of the oxygen and the ozone to the liquid phase. It is accordingly, possible to operate the pressure vessel with a relatively small ullage space.

The method according to the invention is typically operated as a batch treatment in which, on average, during the residence of the aqueous waste material in the vessel it is recycled 5 to 50 times. If desired, however, the process can be operated continuously, typically with there being a plurality of pressure vessels arranged in sequence, with continuous flow of the liquid of a treatment into the most upstream vessel and continuous flow of liquid from one vessel to the next in sequence, and continuous withdrawal of treated liquid from the most downstream of the vessels, each pressure vessel having associated therewith its own means for withdrawing and recirculating aqueous waste material, each such means having means for introducing ozonised oxygen into the recirculating liquid.

Preferably, the pH of the aqueous waste material is adjusted prior to its introduction into the pressure vessel. Thus, sewage sludge is typically digested for the relatively short period, say in the order of 0.5 to 1 hour in sulphuric acid at a pH of about three, such digestion facilitating the breakdown of fibrous material. Typically, this treatment is performed in a holding tank upstream of the or each pressure vessel. A communicating pump recycling the waste material to and from the holding tank may be used to assist in the breakdown of fibrous material in the sludge or other aqueous waste material.

In a batch method according to the invention, the desired reduction in the biochemical oxygen demand of the aqueous waste material may typically be effected in a matter or hours rather than in the days that are required by prior art methods that rely on aerobic or anaerobic digestion of sludge.

Upon completing the treatment to reduce the biochemical oxygen demand of the volume of aqueous material, this volume is preferably then released from the vessel to a flotation tank which is typically open to the atmosphere. Accordingly, gas bubbles are released from the volume of liquid in the flotation tank, thereby causing particles to float to the surface. Such particulate material is then extracted from the flotation tank and passed through a belt press in order to de-water it. This material is relatively easily pressed and is found to be suitable for use for direct land fill.

A method and apparatus according the invention are now described by way of example with reference to the accompanying drawings, in which:

Figure 1 is a block diagram illustrating a process for treating sewage sludge or animal slurries or other forms of aqueous waste material having a relatively high biochemical oxygen demand, and

Figure 2 illustrates apparatus according to the invention for the oxygenation and ozonisation of aqueous waste material as part of the process illustrated in Figure 1.

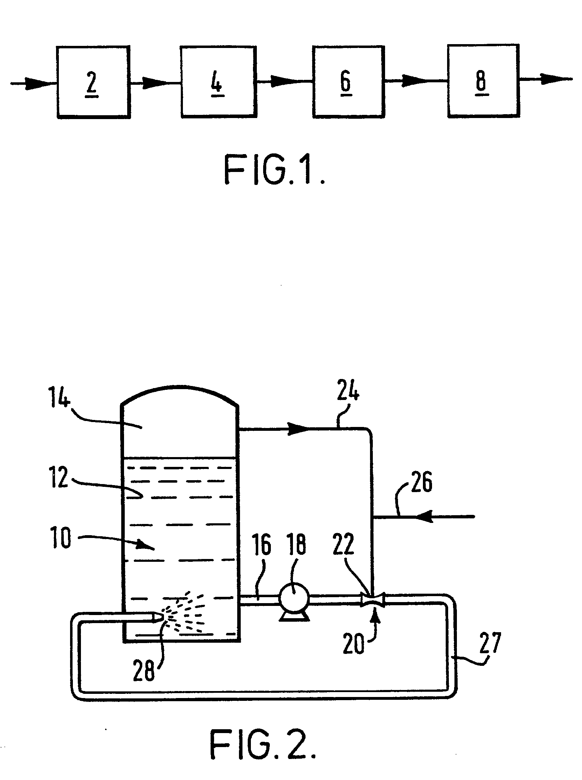

Referring to Figure 1 of the drawings, incomming aqueous waste material for treatment, containing suspended organic solids, and typically having a biochemical oxygen demand in the range 1000 to 10,000 parts per million, flows into a holding tank 2, and sulphuric acid added to it until its pH reaches the value of 3. The aqueous waste material is allowed to stand for, say, half an hour. It is then passed into an aparatus 4 for the oxygenation and ozonisation of the waste material. After about 2 hours treatment with oxygen and ozone, the treated liquid then passed to a flotation tank at atomospheric pressure. Dissolved oxygen comes out of solution and floats particles to the top of the surface in the tank 6. Particles floating on the surface and then removed therefrom and dewatered in a press 8 to form a waste containing about 40% solids which can for example be used for land fill purposes. Water from the tank 6 and the press 8 may be discharged directly to the environment.

A schematic example of the apparatus 4 is shown in Figure 2 of the accompanying drawings. Referring to Figure 2, the illustrated apparatus also includes an upright cylindrical pressure vessel 10 holding a volume 12 of the aqueous waste material under the pressure of gas of about 5 atmospheres absolute in an ullage or head space 14 at the top of the vessel 10. Liquid is withdrawn from the vessel 10 from an outlet 16 near its base by means of a sewage pump 18 having a rotor (not shown) provided with comminution means (not shown) adapted to shred solid materials. (The pump may also have an additional inlet able to be placed in communication with the holding tank 2 (See Figure 1) to enable the vessel 10 to be intially charged with the aqueous waste material. Ozonised oxygen is then introduced therein by one of the means described below to create in the head space 14 a gaseous atmosphere comprising ozonised oxygen at superatmospheric pressure. The outlet of the pump 18 communicates with a venturi 20 which has a throat 22 at a lower pressure than the pressure in the head space 14 of the vessel 10 and communicating with the head space 14 by way of a conduit 24. In operation, ozonised oxygen is thus drawn from the head space 14 into liquid flowing through the venturi 20. The pressure in the head space or ullage space 14 is preferably kept between chosen limits by appropriate addition of make-up oxygen-ozone from a source thereof which may comprise any commercially available ozoniser. Make-up ozonised oxygen is typically added to the conduit 24 through an inlet 26. Alternatively, it may be added directly to the head space of the pressure vessel 10 or may added to the stream of liquid produced by the pump 18 through a separate venturi (not shown).

The venturi 20 is effective to create turbulence in the flow of liquid at its throat and thus the ozonised oxygen enters a turbulent flow of liquid. The turbulence helps to break the ozonised oxygen gas into bubbles, some of which dissolve in the aqueous waste material. The undissolved gas is conducted in the form of bubbles along a conduit 27 which terminates in a nozzle 28 within the volume 12 of aqueous waste material. In operation, the pump 18, the venturi 20 and conduit 27 are so arranged as to maintain the bubbles in dispersion throughout their travel along the conduit 27 without there being any significant coalescence of gas bubbles to form discrete slugs of gas and such that the liquid-gas mixture issues from the nozzle 28 turbulently, whereby the turbulence is able to shear the bubbles into even finer bubbles which may readily dissolve in the liquid in the vessel 10. Some bubbles will however pass into the ullage space 14, or gas will come out of solution and pass into the ullage space 14. The oxygen is employed to add the respiration aerobic microorganisms which are naturally contained in the aqueous waste material and which break down or oxidise organic pollutants in the material. The presence of ozone considerably facilitates the oxidation of certain organic species such as phenols. It is believed that the rate determining step in effecting reduction of the biochemical oxygen demand of the aqueous waste material is the transfer of oxygen and ozone from the gaseous phase into solution. By forming the oxygen and ozone into bubbles and allowing for contact between the bubbles and the liquid both in the conduit 27 and in the volume 12 of the aqueous liquid, relatively rapid oxygenation takes place in comparison with conventional processes.

The rate of withdrawal of aqueous waste material through the outlet 14 may be selected in accordance with the desired reduction in the biochemical oxygen demand of the aqueous waste material.

After treatment of the oxygen and ozone for a chosen period of time, the pump 18 may be employed to tansfer the liquid to the fermentation tank 6 shown in Figure 1. Gas comming out of solution during the transfer helps to float solid particles to the surface of the liquid in the tank 6, as aforementioned.

**Claims**

1. A method of treating aqueous waste material containing organic solids, comprising establishing in a pressure vessel a volume of the aqueous waste material to be treated, comminuting solids in the waste material externally of the pressure vessel, continuously withdrawing a stream of aqueous material from the pressure vessel, introducing ozonised oxygen into the stream, forming a dispersion of bubbles of ozonised oxygen in the stream, re-introducing the stream into the volume of waste material in the vessel, creating turbulence at the region of introduction, collecting undissolved ozonised oxygen in the head space of the vessel, and withdrawing gas from the head space and introducing it into said stream to form said bubbles.

2. A method as claimed in claim 1, in which the pH of the aqueous waste material is adjusted prior to its introduction into the said pressure vessel by digestion in sulphuric acid.

3. A method as claimed in claim 2, in which the pH adjustment is performed in a holding tank upstream of the said pressure vessel.

4. A method as claimed in claim 3, in which a comminuting pump recycling the waste material to and from the holding tank is used to assist in break down of fibrous material in the aqueous waste material.

5. A method as claimed in any one of the preceding claims, in which aqueous waste material is released from the pressure vessel to a flotation tank open to the atmosphere.

6. A method as claimed in claim 5, in which particularte material at the surface of the liquid in the flotation tank is separated therefrom, and is passed through a belt-press to dewater it.

7. A method as claimed in any one of claims 1 to 6, in which, on average, during the residence of the aqueous waste material in the pressure vessel it is recycled from 5 to 50 times.

8. A method as claimed in claim 1 or claim 2, in which there is a plurality of pressure vessels, arranged in sequence, with there being a continuous flow of aqueous waste material from one vessel in the sequence to the next and continuous withdrawal of treated liquid from the most downstream of the vessels, aqueous waste material being recirculated to and from each vessel and ozonised oxygen being introduced into each recirculating liquid.

9. Apparatus for treating aqueous waste material containing organic solids, comprising a pressure vessel having an inlet for the aqueous waste material, and an outlet for withdrawing a stream of aqueous waste material therefrom; means exterior to the pressure vessel for comminuting solids in the organic waste material; means for withdrawing a stream of aqueous material from the vessel; means for introducing ozonised oxygen into said stream such that a dispersion of bubbles of ozonised oxygen in the stream is able to be formed; means for re-introducing the stream into the waste material in the vessel; and means for creating turbulence at the region of reintroduction, wherein said means for introducing oxygen into said stream comprises means for withdrawing ozonised oxygen from the head space of the vessel, and for passing it into said stream.

10. Apparatus as claimed in claim 9, additionally including a holding tank upstream of the said pressure vessel whereby the pH of said aqueous waste material may be adjusted in said tank.

11. Apparatus as claimed in claim 10, additionally including a pump for recycling the waste material to and from the holding tank.

12. Apparatus as claimed in any one of claims 9 to 11, additionally including a flotation tank, open to the atmosphere, downstream of the pressure vessel.

**Revendications**

1. Procédé pour traiter des déchets aqueux contenant des solides organiques, ce procédé comprenant l'établissement, dans un récipient sous pression, d'un certain volume des déchets aqueux à traiter, la fragmentation, réalisée à l'extérieur du récipient sous pression, des solides présents dans les déchets, le soutirage en continu d'un courant de matière aqueuse du récipient sous pression, l'introduction d'oxygène ozonisé dans ce courant, la formation d'une dispersion de bulles d'oxygène ozonisé dans le courant, la réintroduction du courant dans le volume des déchets contenus dans le récipient, la création d'une turbulence dans la région de cette introduction, la collecte de l'oxygène ozonisé non dissous présent dans l'espace de tête du récipient, et le soutirage de gaz en provenance de l'espace de tête et l'introduction de ce gaz dans ledit courant pour former lesdites bulles.

2. Procédé selon la revendication 1, dans lequel avant d'introduire les déchets dans ledit récipient sous pression, on ajuste le pH des déchets aqueux en les soumettant à une digestion dans de l'acide sulfurique.

3. Procédé selon la revendication 2, dans lequel l'ajustement du pH est réalisé dans un réservoir de retenue situé en amont dudit récipient sous pression.

4. Procédé selon la revendication 3, dans lequel on utilise une pompe à rôle de fragmentation, qui recycle les déchets vers, et en provenance du réservoir de retenue, pour contribuer à briser et décomposer la matière fibreuse présente dans les déchets aqueux.

5. Procédé selon l'une quelconque des revendications précédentes, dans lequel les déchets aqueux sont enlevés du récipient sous pression et envoyés dans une cuve de flottation ouverte à l'atmosphère.

6. Procédé selon la revendication 5, dans lequel la matière particulaire, présente à la surface du liquide dans la cuve de flottation, est séparée de ce liquide et est envoyée dans une presse à courroies pour en enlever l'eau.

7. Procédé selon l'une quelconque des revendications 1 à 6, dans lequel, en moyenne, pendant le séjour des déchets aqueux dans le récipient sous pression, ces déchets sont recyclés de 5 à 50 fois.

8. Procédé selon la revendication 1 ou la revendication 2, dans lequel il y a plusieurs récipients sous pression, disposés en une succession ou série, avec un écoulement continu des déchets aqueux d'un récipient de la série vers le suivant et avec un soutirage en continu du liquide traité en provenance de celui, ou de ceux, des récipients situés le plus en aval, les déchets aqueux étant remis en circulation vers et en provenance de chaque récipient et de l'oxygène ozonisé étant introduit dans chaque liquide en recirculation.

9. Appareil pour traiter des déchets aqueux contenant des solides organiques, cet appareil comprenant un récipient sous pression ayant une admission des déchets aqueux, et une sortie pour soutirer un courant de déchets aqueux de ce récipient; un moyen, extérieur au récipient sous pression, pour fragmenter les solides présents dans les déchets organiques; un moyen pour soutirer un courant de la matière aqueuse du récipient; un moyen pour introduire de l'oxygène ozonisé dans ledit courant de façon qu'une dispersion de bulles de l'oxygène ozonisé dans le courant puisse se former; un moyen pour réintroduire le courant dans la matière résiduaire ou les déchets se trouvant dans le récipient; et un moyen pour créer de la turbulence dans la région de cette réintroduction, ledit moyen pour introduire de l'oxygène ozonisé dans ledit courant comprenant un moyen pour prélever de l'oxygène ozonisé dans l'espace de tête du récipient et pour faire passer cet oxygène dans ledit courant.

10. Appareil selon la revendication 9, comprenant en outre un réservoir de retenue situé en amont dudit récipient sous pression, ce qui permet d'ajuster, dans ledit réservoir, le pH desdits déchets aqueux.

11. Appareil selon la revendication 10, comprenant en outre une pompe pour recycler les déchets vers le réservoir de retenue et en provenance de ce réservoir de retenue.

12. Appareil selon l'une quelconque des revendications 9 à 11, comprenant en outre une cuve de flottation, ouverte à l'atmosphère, située en aval du récipient sous pression.

**Patentansprüche**

1. Verfahren zur Behandlung von wäßrigem Abfallmaterial, das organische Feststoffe enthält, bei dem in einem Druckgefäß eine Menge des zu behandelnden wäßrigen Abfallmaterials eingesetzt wird, wobei Feststoffe in dem Abfallmaterial außerhalb des Druckgefäßes pulverisiert werden, kontinuierlich ein Strom von wäßrigem Material aus dem Gefäß abgezogen wird, ozonisierter Sauerstoff in den Strom eingeführt wird, eine Dispersion von Bläschen ozonisiertem Sauerstoffs in dem Strom gebildet wird, der Strom wieder in die Abfallmaterialmenge in dem Gefäß eingeführt wird, in dem Einführbereich Turbulenz erzeugt wird, ungelöster ozonisierter Sauerstoff in dem Kopfraum des Gefäßes gesammelt wird und Gas von dem Kopfraum abgezogen und in den Strom zur Bildung der Bläschen eingeführt wird.

2. Verfahren nach Anspruch 1, bei dem der pH-Wert des wäßrigem Abfallmaterials vor seiner Einführung in das Druckgefäß durch Zersetzung in schwefliger Säure eingestellt wird.

3. Verfahren nach Anspruch 2, bei dem die Einstellung des pH-Wertes in einem Haltetank zustromseitig zum Druckgefäß ausgeführt wird.

4. Verfahren nach Anspruch 3, bei dem eine das Abfallmaterial zu und von dem Haltetank in Umlauf bringende Zerkleinerungspumpe benutzt wird, um beim Zerkleinern von faserförmigem Material in dem wäßrigen Abfallmaterial Unterstützung zu leisten.

5. Verfahren nach einem der vorangehenden Ansprüche, bei dem wäßriges Abfallmaterial aus dem Druckgefäß zu einem zur Umgebung offenen Flotationstank abgelassen wird.

6. Verfahren nach Anspruch 5, bei dem teilchenförmiges Material an der Oberfläche der Flüssigkeit in dem Flotationstank davon abgetrennt und zur Entwässerung durch eine Bandpresse geleitet wird.

7. Verfahren nach einem der Ansprüche 1 bis 6, bei dem das Abfallmaterial im Durchschnitt während seiner Verweilzeit in dem Druckgefäß zwischen 5 und 50 mal in Umlauf gebracht wird.

8. Verfahren nach Anspruch 1 oder 2, bei dem eine Vielzahl von hintereinander angeordneten Druckgefäßen vorhanden ist, wobei ein kontinuierlicher Strom von wäßrigem Abfallmaterial von einem Gefäß der Reihe nach zu dem nächsten vorhanden ist und kontinuierliches Abziehen behandelter Flüssigkeit von dem am weitesten abstromseitigen Gefäß stattfindet, wäßriges Abfallmaterial zu und von jedem Gefäß in Umlauf gebracht wird und ozonisierter Sauerstoff in jede in Umlauf befindliche Flüssigkeit eingeführt wird.

9. Vorrichtung zum Behandeln wäßrigen Abfallmaterials, das organische Feststoffe enthält, mit einem Druckgefäß, das einen Einlaß für das wäßrige Abfallmaterial und einen Auslaß zum Abziehen eines Stromes von wäßrigem Abfallmaterial aus diesem enthält: mit außerhalb des Druckgefäßes befindlichem Mittel zum Pulverisieren von Feststoffen in dem organischen Abfallmaterial; mit Mittel zum Abziehen eines Stromes von wäßrigem Material aus dem Gefäß; mit Mittel zum Einführen von ozonisiertem Sauerstoff in den Strom in der Weise, daß eine Dispersion von Bläschen aus ozonisiertem Sauerstoff in dem Strom gebildet werden kann; mit Mittel zum Wiedereinführen des Stromes in das Abfallmaterial in dem Gefäß; und mit Mittel zum Schaffen von Turbulenz in dem Wiedereinführungsbereich, wobei das Mittel zum Einführen von ozonisiertem Sauerstoff in den Strom Mittel zum Abziehen ozonisierten Sauerstoffs von dem Kopfraum des Gefäßes und zum Einleiten desselben in den Strom umfaßt.

10. Vorrichtung nach Anspruch 9, zusätzlich mit einem Haltetank in Zustromrichtung zum Druckgefäß, wodurch der pH-Wert des wäßrigen Abfallmaterials in dem Tank eingestellt werden kann.

11. Vorrichtung nach Anspruch 10, zusätzlich mit einer Pumpe, um das Abfallmaterial zu und von dem Haltetank in Umlauf zu bringen.

12. Vorrichtung nach einem der Ansprüche 9 bis 11, zusätzlich mit einem zur Umgebung offenen Flotationstank in Abstromrichtung vom Druckgefäß.

FIG.1.

FIG.2.